# EUROPEAN PATENT SPECIFICATION

(11) **EP 4 282 301 B1**
(45) Date of publication and mention of the grant of the patent: **16.09.2026**
(21) Application number: 22175752.9
(22) Date of filing: 27.05.2022
(51) Int. Cl.: A46B 13/02, A46B 9/02, A46B 9/06, A46D 1/00, A61C 17/26, A61C 17/34, A61C 17/22, A46B 9/04

(54) **CLEANING SECTION FOR AN ORAL HYGIENE DEVICE AND ORAL HYGIENE DEVICE**
REINIGUNGSABSCHNITT FÜR EINE MUNDPFLEGEVORRICHTUNG UND MUNDPFLEGEVORRICHTUNG
SECTION DE NETTOYAGE POUR DISPOSITIF D'HYGIÈNE BUCCALE ET DISPOSITIF D'HYGIÈNE BUCCALE

(43) Date of publication of application: 29.11.2023
(73) Proprietor: Braun GmbH, 65824 Schwalbach am Taunus (DE)
(72) Inventor: FISCHER, Vladimir, 61476 Kronberg (DE); SCHMELCHER, Heidrun Annika, 61476 Kronberg (DE); ALINSKI, Jens, 61476 Kronberg (DE); STÖRKEL, Ulrich, 61476 Kronberg (DE); JUNGNICKEL, Uwe, 61476 Kronberg (DE); KIIVER, Egle, 61476 Kronberg (DE); FRANKE, Sven Alexander, Kronberg (DE); CLAIRE-ZIMMET, Karen Lynn, 61476 Kronberg (DE)
(74) Representative: P&G Patent Germany

(56) References cited:
- WO-A1-2022/062189
- DE-A1- 19 829 611
- KR-Y1- 200 427 125
- US-A1- 2019 104 833
- US-S- D 868 476

## Description

### FIELD OF THE INVENTION

The present disclosure is concerned with a cleaning section for an electric oral hygiene device comprising a carrier mounted for driven rotation and/or oscillating rotation around a rotation axis, at least a plurality of first cleaning elements and a plurality of second cleaning elements, the cleaning elements being mounted on a mounting surface of the carrier. The present disclosure is further concerned with an electric oral hygiene device comprising such cleaning section and a handle, the cleaning section being repeatedly attachable to and detachable form the handle.

### BACKGROUND OF THE INVENTION

Tufts composed of a plurality of filaments for oral care implements, like manual and powered toothbrushes, are well known in the art. Generally, the tufts are attached to a bristle carrier of a head intended for insertion into a user's oral cavity. A grip handle is usually attached to the head, which handle is held by the user during brushing. The head is either permanently connected or repeatedly attachable to and detachable from the handle.

In order to clean teeth effectively, appropriate contact pressure has to be provided between the free ends of the filaments and the teeth. Generally, the contact pressure depends on the bending stiffness and the displacement of the filaments, while the bending stiffness of a single filament depends on its length and cross-sectional area. Usually, filaments with greater length show lower bending stiffness as compared to shorter filaments. However, relatively thin filaments tend to flex away easily and the relatively low bending stiffness results in reduced plaque removal efficiency on teeth surfaces, as well as in less interdental penetrations properties and cleaning performance. In order to compensate said reduction in bending stiffness of longer filaments, the size of the cross-sectional area of a filament could be increased. However, relatively thick filaments may create an unpleasant brushing sensation and tend to injure the gums in the oral cavity, in particular if powered toothbrushes are used. In addition, thicker filaments may show reduced bend recovery and usage of said filaments may generate a worn-out impression of the tuft pattern after a relatively short time of use.

Further, filaments having a profile along their length extension resulting in a non-circular cross-sectional area, e.g. a polygonal- or a cross-shaped cross-sectional area, are also known in the art. Such filaments should improve cleaning properties of oral care implements during normal use. In particular, the profiled edges should provide a stronger scraping action during a brushing process to improve removal of plaque and other residuals on the teeth surfaces.

While toothbrushes comprising conventional type of tufts clean the outer buccal face of teeth adequately, they are generally not as well suited to provide adequate removal of plaque and debris from the interproximal areas and other hard to reach regions of the mouth since penetration into interdental spaces is still relatively difficult. In particular, they are not well suited to sufficiently clean the gingival margin where typically plaque starts to grow. Thus, in order to achieve and preserve good oral health, and to prevent gingivitis, it is important to clean along the gum line and, in particular, the gap between teeth and periodontium, the so-called gingival groove. It is known that a lack of good removal of plaque in the gingival groove can cause gingivitis, i.e. inflammation of the gum tissue. Additionally, standard tufts do not provide sufficient capillary effects to remove plaque and debris from the teeth and gum surfaces during brushing. However, in order to achieve good cleaning results, the plaque must be reached by the tufts/filaments, then the plaque must be disrupted and, finally, taken away. Further, the tufts shall provide good sensory feeling on the gums during brushing, in particular if powered/electrically driven toothbrushes performing a rotating and/or oscillating movement are used.

Additionally, the mechanical stress occurring within a cross-shaped filament during a brushing process leads to higher stress in the tips of the cross-shaped filaments as compared to circular-shaped filaments. This means, in tufts having the same overall stiffness, cross-shaped filaments have to bear higher maximum stress values as compared to circular-shaped filaments. This increased stress in the individual cross-shaped filaments can lead to an increased wear behavior during usage. This wear is characterized by an increased splay of the tuft which leads to less consumer acceptance.

US 2019/104833 A1 discloses a head for an oral care implement, the head comprising: an outer rim and an inner portion, the head further comprising at least one tuft of filaments of a first type and at least one tuft of filaments of a second type, the at least one tuft of the first type being arranged at the inner portion of the head, and comprising a plurality of filaments, each filament having a longitudinal axis and a substantially circular cross-sectional area extending in a plane substantially perpendicular to the longitudinal axis, and the at least one tuft of the second type being arranged at the outer rim of the head, and comprising a plurality of filaments, each filament having a longitudinal axis and a substantially cross-shaped cross-sectional area extending in a plane substantially perpendicular to the longitudinal axis, the cross-shaped cross-sectional area having four projections and four channels, the projections and channels being arranged in an alternating manner.

DE19829611 A1 discloses a method for producing a bristle tuft, in particular for a toothbrush, wherein the bristle tuft is composed of a plurality of filaments, and wherein the free ends of the filaments of the bristle tuft are split in their longitudinal direction.

KR 200427125 Y1 discloses an electric toothbrush with a brush head on which bristle tufts are mounted in a concentric circular manner.

It is an object of the present disclosure to provide a cleaning section for an electric oral hygiene device which overcomes at least one of the above-mentioned drawbacks. It is also an object of the present disclosure to provide an electric oral hygiene device comprising such cleaning section.

### SUMMARY OF THE INVENTION

In accordance with one aspect, a cleaning section for an electric oral hygiene device is provided, the cleaning section comprising: a carrier mounted for driven rotation and/or oscillating rotation around a rotation axis, at least a plurality of first cleaning elements and a plurality of second cleaning elements, the cleaning elements mounted on a mounting surface of the carrier, the carrier having an outer rim and an inner portion, the plurality of first cleaning elements being arranged at the inner portion of the carrier, and the plurality of second cleaning elements being arranged at the outer rim of the carrier, the plurality of first cleaning elements each having a longitudinal axis and a substantially cross-shaped cross-sectional area extending in a plane substantially perpendicular to the longitudinal axis, the cross-shaped cross-sectional area having four projections and four channels, the projections and channels being arranged in an alternating manner. At least some of the first cleaning elements are at least partially arranged in a circle around the rotation axis. At least some of the first cleaning elements are circumferentially inclined in the same circumferential direction with respect to the rotation axis

In accordance with one aspect an electric oral hygiene device is provided, the device comprising such cleaning section and a handle, the cleaning section being repeatedly attachable to and detachable form the handle.

### BRIEF DESCRIPTION OF THE DRAWINGS

The invention is described in more detail below with reference to various embodiments and figures, wherein:
Fig. 1 shows a schematic perspective view of an electric oral hygiene device comprising a handle and a first example embodiment of a cleaning section according to the present disclosure;
Fig. 2 shows a schematic perspective view of the cleaning section of Fig. 1;
Fig. 3 shows a schematic perspective view of a second example embodiment of a cleaning section for an electric oral hygiene device according to the present disclosure;
Fig. 4 shows a schematic perspective view of a third example embodiment of a cleaning section for an electric oral hygiene device according to the present disclosure;
Fig. 5 shows a schematic perspective view of a fourth example embodiment of a cleaning section for an electric oral hygiene device according to the present disclosure;
Fig. 6 shows a schematic perspective view of a fifth example embodiment of a cleaning section for an electric oral hygiene device according to the present disclosure; and
Fig. 7 shows a schematic cross-sectional view of a first cleaning element.

### DETAILED DESCRIPTION OF THE INVENTION

The electric oral hygiene device according to the present disclosure - also referred to as "oral care implement" - may be an electrically driven toothbrush comprising a handle and cleaning section. Such cleaning section is also referred to as "head". The cleaning section extends from the handle and is repeatedly attachable to and detachable from the handle.

The cleaning section comprises a carrier/bristle carrier which may have a substantially circular or oval shape. The carrier has an outer rim and an inner portion. Such carrier may be provided for an electrical toothbrush which may perform a rotational oscillation movement. The bristle carrier of an electrical toothbrush can be driven to rotate about and to move axially along an axis of movement in an oscillating manner, wherein such axis of movement may extend substantially perpendicular to the plane defined by the upper top surface of the bristle carrier.

At least a plurality of first cleaning elements and a plurality of second cleaning elements are mounted on a mounting surface of the carrier. While the plurality of first cleaning elements are arranged/mounted at the inner portion of the carrier, the plurality of second cleaning elements are arranged/mounted at the outer rim of the carrier i.e. in close proximity to said outer rim.

The plurality of first cleaning elements have each a longitudinal axis and a substantially cross-shaped cross-sectional area extending in a plane substantially perpendicular to the longitudinal axis. The longitudinal axis of a cleaning element is defined by the main extension of the cleaning element. The cross-shaped cross-sectional area of the first cleaning element has four projections and four channels, the projections and channels being arranged in an alternating manner.

The first cleaning element may be an elastomeric element or a filament. Such filament may be made from a thermoplastic polymer, e.g., from polybutylene terephthalate (PBT). A plurality of such first cleaning elements/filaments can be bundled together to form a tuft of filaments mounted on the carrier. Such a tuft of first cleaning elements/filaments may be referred to as a "first type of tuft". Optionally, such first type of tuft may not only comprise first cleaning elements, but a mix of first cleaning elements and a number of other type of cleaning elements/filaments. For example, a number of first cleaning elements/filaments and a number of circular and/or trilobal filaments may be bundled together to form a first type of tuft.

The second cleaning elements arranged at the outer rim at the carrier have a longitudinal axis and a substantially cross-sectional area extending in a plane substantially perpendicular to the longitudinal axis. The cross-section area of the second cleaning elements is different from the cross-sectional area of the first cleaning elements. For example, the cross-sectional area of the second cleaning elements may be substantially circular, trilobal, or may have a shape comprising a plurality of indentations. Such second cleaning elements may be elastomeric elements or filaments bundled together to form a tuft of filaments. Such tuft of second cleaning elements/filaments may be referred to as a "second type of tuft".

Such arrangement of first and second cleaning elements provide superior brushing/cleaning effects. While the first cleaning elements arranged at the inner portion of the carrier can provide deep cleaning effects due to the projections performing a scraping action on the teeth thereby removing plaque and other residuals on the teeth surfaces, the second cleaning elements arranged at the outer rim can provide a gentler cleaning action along the more sensitive gumline. Also, the projections of the first cleaning elements can penetrate into interdental areas and hard to reach regions more easily during the rotational oscillation movement of the head which may provide further improved cleaning properties. Plaque and other residues may be loosened by the oscillating action of the first cleaning elements, whereas the rotational movement may sweep the plaque and further residues away.

Since the first cleaning elements are arranged at the inner portion of the carrier, they rotate and move less during a brushing action as compared to the second cleaning elements arranged at the outer rim. This has the benefit, that the first cleaning elements flex and bend less during use. Thus, mechanical stress occurring within a cross-shaped filament during a brushing process, leading to higher stress in the tips of the cross-shaped filaments (as compared to circular-shaped filaments) is reduced. Wear of the cross-shaped filaments during usage can be significantly decreased. Such wear is typically characterized by an increased splay of the tuft which leads to less consumer acceptance. Also, thinner cleaning elements can be applied which create a more pleasant brushing sensation/experience. If such thin filaments are arranged at the inner portion of the carrier, such elements generate a less worn-out impression. For example, the first cleaning elements may have each a cross-sectional area with an outer diameter, and the outer diameter of at least some of the first cleaning elements may be from about 0.1 mm to about 0.3 mm, or about 0.256 mm. Surprisingly, it has been found out that cross-shaped filaments having a diameter of about 0.256 mm lead to improved brushing sensation as compared to cross-shaped filaments having a larger diameter.

In the context of the present disclosure the outer diameter of the first cleaning element is defined by the length of a straight line that passes through the center of the element's cross-sectional area and whose endpoints lie on the most outer circumference of the cross-sectional area. In other words, the cross-shaped cross-sectional area has an imaginary outer circumference in the form of a circle (i.e., outer envelope circle), and the outer diameter is defined as the longest straight-line segment of the circle passing through the center of the circle.

The cross-shaped filaments of a tuft of the first type can be provided with a relatively low packing factor within a range from about 45% to about 57%, or from about 45% to about 55%, or within a range from about 48% to about 50%. In the context of this disclosure the term "packing factor" is defined as the sum total of the transverse cross-sectional areas of the filaments in the tuft hole divided by the transverse cross-sectional area of the tuft hole. In embodiments where anchors, such as staples, are used to mount the tuft within the tuft hole, the area of the anchoring means is excluded from the transverse cross-sectional area of the tuft hole.

A packing factor from about 45% to about 57%, or from about 45% to about 55%, or from about 48% to about 50% opens up a specific void volume within the tuft while the cross-shaped filaments have still contact to each other along a portion of the outer lateral surface. The void volume may deliver more toothpaste to the tooth brushing process, and the toothpaste can interact with the teeth for a longer period of time which contributes to improved tooth brushing effects. In addition, the void volume, i.e. the space between filaments, enables increased uptake of loosened plaque due to improved capillary action. In other words, such low packing factor may result in more dentifrice/toothpaste retaining at/adhering to the filaments for a longer period of time during a tooth brushing process. Further, the lower tuft density may avoid that the dentifrice spread away which may result in an improved overall brushing process. Toothpaste can be better received in the cannels and, upon cleaning contact with the teeth, directly delivered, whereby a greater polishing effect is achieved, which is desirable, in particular for removal of tooth discoloration.

In other words, a relatively low packing factor within a range from about 45% to about 57%, or from about 45% to about 55%, or from about 48% to about 50% may provide improved brushing effectiveness, i.e. better removal of plaque and debris from the teeth's surface and gums due to improved capillary effects. These capillary effects may enable the dentifrice to flow towards the tip/free end of the filaments and, thus, may make the dentifrice more available to the teeth and gums during brushing. At the same time uptake of plaque and debris away from the teeth and gum surfaces is improved.

Further, due to the cross-shaped geometry of the filament, each single filament is stiffer than a circular-shaped filament, when made of the same amount of material. However, due to the low packing factor within a range from about 45% to about 57%, or from about 45% to about 55%, or from about 48% to about 50%, the stiffness of the overall tuft made of cross-shaped filaments is reduced as compared to a tuft of circular-shaped filaments. Surprisingly, it has been found out that such tuft provides improved sensory experience, i.e. a softer feeling within the mouth during brushing, while providing increased cleaning efficiency. The projections of the cross-shaped filaments can easily enter the gingival groove and other hard to reach areas, e.g. interproximal tooth surfaces, scratch on the surfaces to loosen the plaque, and due to the improved capillary effects of the overall tuft, the plaque can be better taken away. Due to the special shape, cross-shaped filaments can penetrate deeper into the gingival groove and interproximal areas. In addition, the relatively low packing factor of the tuft of the first type enables the individual cross-shaped filaments to better adapt to the contour of the gum line and gingival grove.

Since the at least one tooth cleaning element of the second type is arranged at the outer rim of the carrier/head, i.e. at the outer edge of the bristle field, said second cleaning elements may provide the tuft of the first type with increased stability in order to prevent said tuft from extensive splaying. Consequently, the second cleaning elements can significantly improve the wear behavior and wear appearance of the tuft of the first type having a relatively low packing factor, and, thus, less stability, while providing increased tooth cleaning efficiency. Brushes which look less used after brushing, in particular over a longer period of time, provide higher consumer acceptance.

The second cleaning elements may be filaments grouped together to form at least one tuft of a second type, and may have a higher bending stiffness/more stability than the tuft comprising first cleaning elements. Said second type of tuft may have a packing factor of about 70% to about 80% thereby providing more bending stiffness and stability of the overall tuft as compared to the first type of tuft. In case the second cleaning elements is an elastomeric element it can be made of TPE material, and/or may have the shape of an elastomeric wall extending along the length extension of the head. Such elastomeric wall may provide a polishing effect on the outer tooth surfaces and may remove tooth coloration more completely. Alternatively, the elastomeric element may have the shape of a rubber nub or finger for stimulating and massaging the gums.

At least some of the first cleaning elements are at least partially arranged in a circle around the rotation axis.

Further, at least some of the second cleaning elements may be at least partially arranged in a circle around the rotation axis along the outer rim of the carrier. Such a carrier/head configuration may further enhance the effects and benefits as described above.

At least some of the first cleaning elements are circumferentially inclined in the same circumferential direction with respect to the rotation axis to enhance interdental penetration of the cleaning elements, and, thus, brushing/cleaning effects. Further, at least some of the first cleaning elements may be arranged in the center of the carrier.

At least some of the first cleaning elements and some of the second cleaning elements may be arranged in an alternating manner in circumferential direction with respect to the rotation axis.

Each channel of the cross-shaped first cleaning element may have a concave curvature formed by neighboring and converging projections. Said concave curvature may have a radius within a range from about 0.02 mm to about 0.09 mm, or from about 0.03 mm to about 0.06 mm. In other words, two neighboring projections, i.e. two neighboring side lateral edges of said projections may converge at the bottom of a channel and define a "converging region". The neighboring projections may converge in said converging region in a manner that a concave curvature, i.e. with an inwardly curved radius is formed at the bottom of the channel. A radius within such range is relatively large as compared to standard cross-shaped filaments.

In the past it has been observed that conventional cross-shaped filaments have the disadvantage that these types of filaments can easily catch amongst themselves, both during manufacturing and brushing. However, it has been surprisingly found out that the specific geometry/contour of the outer surface of the first cleaning elements according to the present disclosure allows for improved manufacturability since there is significant less likelihood that the filaments/cleaning elements get caught when a plurality of said filaments is combined to form one tuft during a so-called "picking process".

Further, due to the relatively large radius at the bottom of the channel, the filament/first cleaning element is provided with increased stability, and, thus, less filament damage occur during the brush manufacturing process, e.g. when the filaments get picked and fixed on the mounting surface of the brush head during a stapling or hot tufting process. In the past, it has been observed that a relatively high number of conventional cross-shaped filaments get damaged during the picking process, in particular projections may break away from the filament, or the filament gets spliced in the converging region at the bottom of a channel. Spliced filaments can provide relatively sharp edges which may harm/injure the oral tissue during brushing.

Further, surprisingly it has been found out that due to the specific geometry of the radius of the concave curvature, the filaments within a tuft can be better packed with a relatively low packing factor, i.e. within a range from about 45% to about 57%, or from about 45% to about 55%, or from about 48% to about 50%, as gaps between two adjacent filaments can be maximized. It has been found out that it is important that the filaments open up a specific void area while still having contact to each other. In order to produce a toothbrush that is compliant with regulatory requirements and appreciated by the consumer regarding the overall appearance, typically a high packing factor (about 70% to about 80% for round filaments; about 80% for diamond-shaped filaments; about 89% for trilobal filaments) is needed. With respect to toothbrushes manufactured by a stapling process, a packing factor lower than about 70% results in insufficiently compressed filaments within the tuft hole and, thus, provides insufficient tuft retention. Consequently, regulatory requirements are not met in case round filaments are provided with a packing factor lower than about 70%. For hot tufted toothbrushes, a packing factor lower than about 70% would allow plastic melt entering into the tuft during the over molding process as the pressure of the melt pushes the filaments of the tuft to one side until the filaments have contact to each other. So-called polyspikes are thereby formed which may injure/harm the gums and, thus resulting in unsafe products. Beside regulatory and safety aspects a low packed tuft of round filaments would have a "wild" and destroyed appearance and would not be accepted by consumers. However, with the usage of cross-shaped filaments having a radius of the concave curvature of the channel within a range from about 0.02 mm to about 0.09 mm a low packing factor can be achieved for compliant and safe products having an acceptable overall appearance while providing improved cleaning properties.

Each projection of the cross-shaped cross-sectional area comprises two outer lateral edges along the filament's longitudinal extension. These lateral edges may generate relatively high concentrated stress on the tooth surfaces to disrupt and remove plaque. The outer edges can provide a scraping effect so that plaque and other debris get loosened more effectively. Due to the relatively large radius of the concave curvature at the bottom of the channel, the projections are provided with increased stiffness/stability to loosen/remove plaque from the teeth surfaces more easily/effectively. The channels can then capture the disrupted plaque and may move it away from the teeth.

Surprisingly, it has been found out that such filament geometry provides even further improved cleaning performance while maintaining brush comfort in the mouth. In addition, it has been found out that such geometry helps even more to reduce the appearance of filament/tuft wear since there is even less likelihood that the filaments get caught during brushing. Further, the manufacturability of such filaments during a toothbrush manufacturing process is further improved.

Each projection of the cross-shaped cross-sectional area of the first cleaning element has a distal end that may be end-rounded thereby forming a curvature with a specific radius. The radius of the curvature of the projection may from about 0.01 mm to about 0.02 mm, or about 0.015 mm.

The ratio of the radius of the curvature of the projection to the radius of the curvature of the channel may be within a range from about 0.1 to about 1.0, or from about 0.2 to about 0.5. Said ratio is relatively low as compared to standard cross-shaped filaments according to the state of the art. In other words, the radius of the concave curvature of the channel is relatively large with respect to the diameter of the curvature of the projection, i.e., with respect to the width extension of the projection - or in other words, the diameter of the curvature of the projection can be relatively thin as compared to the radius of the concave curvature of the channel. For example, each projection of the first cleaning element may have a maximum thickness, and the maximum thickness of each projection may be from about 0.025 mm to about 0.045 mm, or from about 0.037 to about 0.041 mm. The relatively large radius provides the relatively thin projections with increased stability. Thus, there is less likelihood that the filaments/projections get damaged or that the relatively thin projections break away during the brush manufacturing process, in particular when the filaments get picked. In other words, the manufacturability of such filaments during a toothbrush manufacturing process is further improved.

Further, surprisingly, it has been found out that such filament geometry provides even further improved cleaning performance while maintaining brush comfort in the mouth. In addition, it has been found out that such geometry further helps to reduce the appearance of filament/tuft wear since there is even less likelihood that the filaments get caught during brushing.

The diameter of the curvature of the projection may be within a range from about 5% to about 12% of the outer diameter of the filament. Surprisingly, it has been found out that such filaments may adapt to the teeth contour even better and penetrate into the interdental spaces more easily to remove plaque and debris more completely.

The projections of the cross-shaped first cleaning element may taper radially off in an outward direction, i.e. in a direction away from the center of the cross-sectional area and towards the outer circumference. Such tapered projections may further assure access to narrow spaces and other hard to reach areas and may be able to penetrate into/enter interdental areas even more deeply and effectively. Since the bending stiffness of a cross-shaped filament/cleaning element is higher as compared to a circular-shaped filament made of the same amount of material, the higher bending stiffness may force the filament's projections to slide into the interdental areas more easily.

The projections may taper radially outwards by an angle within a range from about 6° to about 25°, or by an angle within a range from about 8° to about 20°. Surprisingly, it has been found out that such tapering allows for optimal interdental penetration properties. Additionally, such filament can be more easily bundled in a tuft without catching on contours of adjacent filaments.

The first cleaning elements/filaments may be a substantially cylindrically shaped cleaning element/filament, i.e., the filament may have a substantially cylindrical outer lateral surface. In other words, the shape and size of the cross-sectional area of the filament along its longitudinal axis may not vary substantially, i.e., the shape and size of the cross-sectional area may be substantially constant over the longitudinal extension of the filament. In the context of this disclosure the term "outer lateral surface of a filament" means any outer face or surface of the filament on its sides. This type of filament may provide increased bending stiffness as compared to tapered filaments. A higher bending stiffness may further facilitate the filament to penetrate into interdental gaps/spaces. Further, cylindrical filaments are generally slowly worn away which may provide longer lifetime of the filaments.

The cylindrical filament may have a substantially end-rounded tip/free end to provide gentle cleaning properties. End-rounded tips may avoid that gums get injured during brushing. Within the context of this disclosure, end-rounded filaments would still fall under the definition of a substantially cylindrical filament.

Alternatively, the first cleaning elements/filaments may comprise along its longitudinal axis a substantially cylindrical portion and a tapered portion, the tapered portion tapers in the longitudinal direction towards a free end of the filament, and the cylindrical portion has a cross-sectional area according to the present disclosure. In other words, the filaments of the tuft of the first type may be tapered filaments having a pointed tip. Tapered filaments may achieve optimal penetration into areas between two teeth as well as into gingival pockets during brushing and, thus, may provide improved cleaning properties. The tapered filaments may have an overall length extending above the mounting surface of the head within a range from about 8 mm to about 16 mm, optionally about 12.5 mm, and a tapered portion within a range from about 5 mm to about 10 mm measured from the tip of the filament. The pointed tip may be needle shaped, may comprise a split or a feathered end. The tapering portion may be produced by a chemical and/or mechanical tapering process.

The first and/or second cleaning elements may be made of polyamide, e.g. nylon, with or without an abrasive such as kaolin clay, polybutylene terephthalate (PBT) with or without an abrasive such as kaolin clay and/or of polyamide indicator material, e.g. nylon indicator material, colored at the outer surface. The coloring on the polyamide indicator material may be slowly worn away as the filament is used over time to indicate the extent to which the filament is worn.

The first and/or second cleaning elements may comprise at least two segments of different materials. At least one segment may comprise a thermoplastic elastomer material (TPE) and at least one segment may comprise polyamide, e.g. nylon, with or without an abrasive such as kaolin clay, polybutylene terephthalate (PBT) with or without an abrasive such as kaolin clay or a polyamide indicator material, e.g. a nylon indicator material, colored at the outer surface. These at least two segments may be arranged in a side-by-side structure or in a core-sheath structure which may result in reduced stiffness of the overall filament. A core-sheath structure with an inner/core segment comprising a harder material, e.g. polyamide or PBT, and with an outer/sheath segment surrounding the core segment and comprising a softer material, e.g. TPE, may provide the filament with a relatively soft outer lateral surface which may result in gentle cleaning properties.

The first and/or second cleaning elements may comprise a component selected from fluoride, zinc, strontium salts, flavor, silica, pyrophosphate, hydrogen peroxide, potassium nitrate or combinations thereof. For example, fluoride may provide a mineralization effect and, thus, may prevent tooth decay. Zinc may strengthen the immune system of the user. Hydrogen peroxide may bleach/whiten the teeth. Silica may have an abrasive effect to remove dental plaque and debris more effectively. Pyrophosphate may inhibit the formation of new plaque, tartar and dental calculus along the gum line. A cleaning element/filament comprising pyrophosphate may offer lasting protection against inflammations of the gums and mucous membrane of the mouth.

If a plurality of such cleaning elements is bundled together to form a tuft, they may be arranged in a manner that filaments at the tuft's outer lateral surface may comprise pyrophosphate to inhibit the formation of plaque, tartar and dental calculus along the gum line whereas filaments arranged in the center of the tuft may comprise fluoride to mineralize the teeth during a brushing process.

At least one of the components listed above may be coated onto a sheath, i.e. onto an outer segment of a filament. In other words, at least some of the first and/or second cleaning elements/filaments of the tuft may comprise a core-sheath structure wherein the inner/core segment may comprise TPE, polyamide or PBT, and the outer/sheath segment may comprise at least one of the components listed above. Such core-sheath structure may make the component(s) directly available to the teeth in a relatively high concentration, i.e. the component(s) may be in direct contact with the teeth during brushing.

Alternatively, at least one of the components listed above may be co-extruded with TPE, polyamide, e.g. nylon, and/or PBT. Such embodiments may make the component(s) gradually available to the teeth when the filament material is slowly worn away during use.

A head for an oral care implement in accordance with the present disclosure comprises a bristle carrier which can be provided with tuft holes, e.g. blind-end bores. Tufts according to the present disclosure may be fixed/anchored in said tuft holes by a stapling process/anchor tufting method. This means, that the filaments of the tufts are bent/folded around an anchor, e.g. an anchor wire or anchor plate, for example made of metal, in a substantially U-shaped manner. The filaments together with the anchor are pushed into the tuft hole so that the anchor penetrates into opposing side walls of the tuft hole thereby anchoring/fixing/fastening the filaments to the bristle carrier. The anchor may be fixed in opposing side walls by positive and frictional engagement. In case the tuft hole is a blind-end bore, the anchor holds the filaments against a bottom of the bore. In other words, the anchor may lie over the U-shaped bend in a substantially perpendicular manner. Since the filaments of the tuft are bent around the anchor in a substantially U-shaped configuration, a first limb and a second limb of each filament extend from the bristle carrier in a filament direction. Filament types which can be used/are suitable for usage in a stapling process are also called "two-sided filaments". Heads for oral care implements which are manufactured by a stapling process can be provided in a relatively low-cost and time-efficient manner. Due to the improved geometry of the filaments of the at least one tuft of the first type according to the present disclosure, fewer filaments get damaged, e.g. by slicing, when the filaments get picked and fixed on the mounting surface of the brush head during the stapling process. Further, fewer filaments get caught on the outer surface of a neighboring filament when a plurality of filaments are picked to form one tuft.

Alternatively, the tufts may be attached/secured to the head by means of a hot tufting process. One method of manufacturing the head of an oral care implement may comprise the following steps: Firstly, the tufts may be formed by providing a desired amount of filaments according to the present disclosure. Secondly, the tufts may be placed into a mold cavity so that ends of the filaments which are supposed to be attached to the carrier extend into said cavity. Thirdly, the carrier may be formed around the ends of the filaments extending into the mold cavity by an injection molding process, thereby anchoring the tufts in the carrier. Before starting the injection molding process, the ends of the at least one tuft extending into the mold cavity may be optionally melted or fusion-bonded to join the filaments together in a fused mass or ball so that the fused masses or balls are located within the cavity. The tufts may be held in the mold cavity by a mold bar having blind holes that correspond to the desired position of the tuft on the finished head of the oral care implement. In other words, the filaments of the tufts attached to the carrier by means of a hot tufting process may be not doubled over a middle portion along their length and may be not mounted in the head by using an anchor/staple. The tufts may be mounted on the carrier by means of an anchor-free tufting process. A hot tufting manufacturing process allows for complex tuft geometries. For example, the tufts may have a specific topography/geometry at its free end, i.e. at its upper top surface, which may be shaped to optimally adapt to the teeth's contour and to further enhance interdental penetration. For example, the topography may be chamfered or rounded in one or two directions, pointed or may be formed linear, concave or convex. Due to the improved geometry of the filaments/first cleaning elements according to the present disclosure, fewer filaments get damaged, e.g. by slicing, when the filaments get picked and fixed on the mounting surface of the brush head during the hot-tufting process. Further, fewer filaments get caught on the outer surface of a neighboring filament when a plurality of filaments are picked to form one tuft.

The following is a non-limiting discussion of example embodiments of oral hygiene devices and parts thereof in accordance with the present disclosure, where reference to the Figures is made.

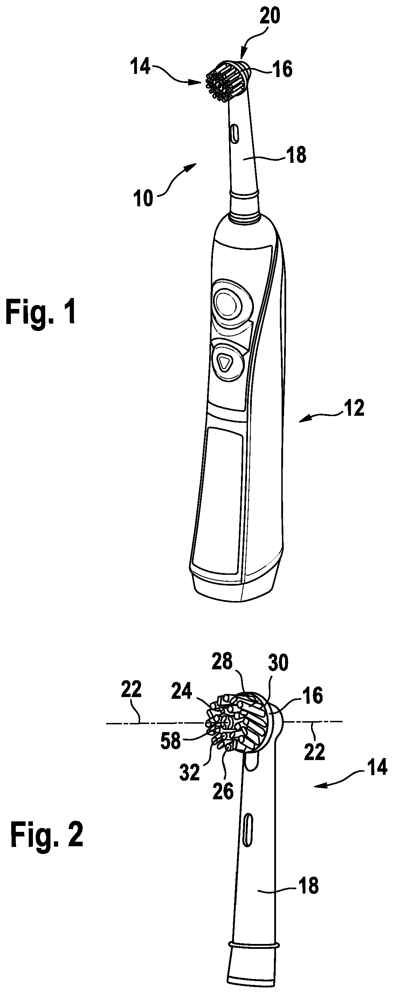

Fig. 1 shows a schematic perspective view of an example embodiment of an electric oral hygiene device 10. In the present example, the electric oral hygiene device 10 is an electric toothbrush comprising a handle 12 and a cleaning section 14. Cleaning section 14 comprises a toothbrush head or bristle carrier 16 and a shaft 18 which is repeatedly attachable to and detachable form the handle 12.

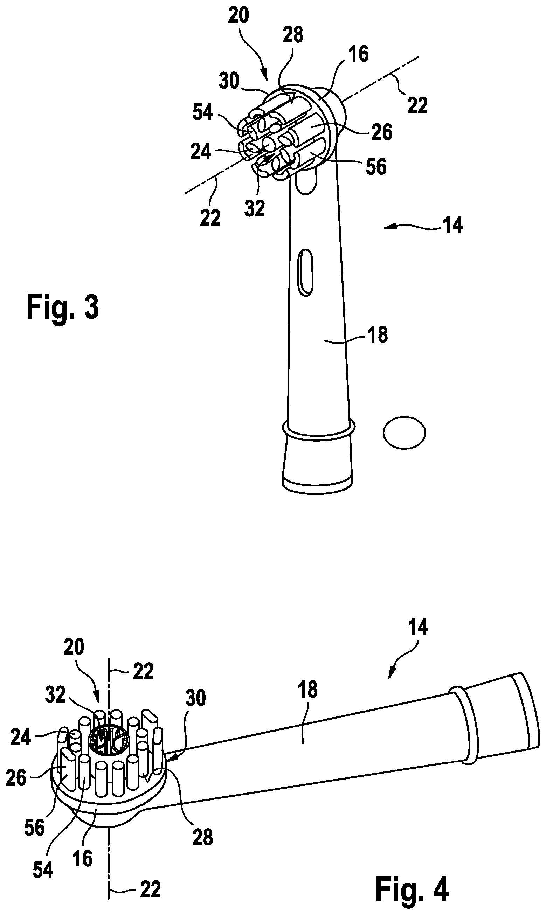

As shown in Fig. 2, the carrier 16 of cleaning section 14 is mounted on a head 20 for driven rotation and/or oscillating rotation around a rotation axis 22. As derivable from example embodiments according to Figs. 2 to 6, at least a plurality of first cleaning elements 24 and a plurality of second cleaning elements 26 are mounted on a mounting surface 28 of the carrier 16. The carrier 16 has an outer rim 30 and an inner portion 32. While the plurality of first cleaning elements 24 are arranged at the inner portion 32 of the carrier 16, the plurality of second cleaning elements 26 arranged at the outer rim 30 of the carrier 16. The first and/or second cleaning elements 24, 26 can be filaments bundled together in tufts, or elastomeric cleaning elements. The first and/or second cleaning elements may be made from a thermoplastic polymer, e.g. from polybutylene terephthalate (PBT).

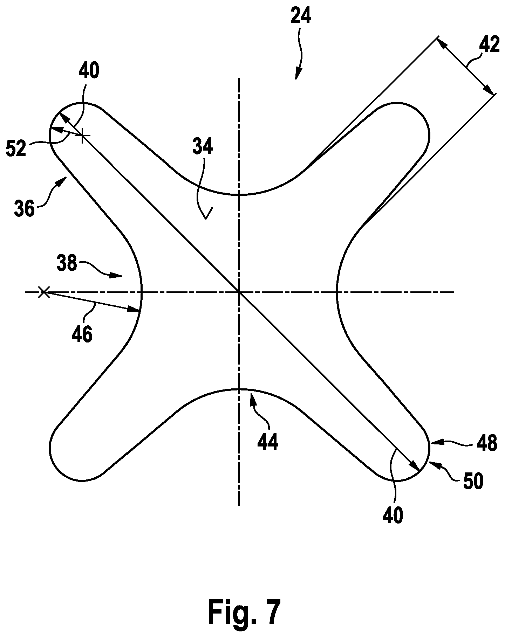

As shown in Fig. 7, the first cleaning elements 24 has a longitudinal axis and a substantially cross-shaped cross-sectional area 34 extending in a plane substantially perpendicular to the longitudinal axis. The cross-shaped cross-sectional area 34 has four projections 36 and four channels 38, the projections 36 and channels 38 being arranged in an alternating manner. Likewise, the second cleaning elements 26 have each a longitudinal axis. However, the cross-sectional area extending in a plane substantially perpendicular to the longitudinal axis may be circular, for example.

The cross-sectional area 34 of the first cleaning elements 24 has an outer diameter 40, and the outer diameter of at least some of the first cleaning elements can be from about 0.1 mm to about 0.3 mm, or about 0.256 mm.

Each projection 36 of the first cleaning element 24 has a maximum thickness 42, and the maximum thickness 42 of each projection may be from about 0.025 mm to about 0.045 mm, or from about 0.037 to about 0.041 mm. Further, each projection 36 of the first cleaning elements 24 has a distal end 48. Said distal end 48 can be end-rounded thereby forming a curvature 50 with a radius 52 from about 0.01 mm to about 0.02 mm, or about 0.015 mm.

Each channel 38 of the first cleaning element 24 has a concave curvature 44 formed by neighboring and converging projections 36. Said concave curvature 44 may have a radius 46 within a range from about 0.02 mm to about 0.09 mm, or from about 0.03 mm to about 0.06 mm.

With such geometry of a first cleaning element 24, a plurality of such first cleaning elements 24 can be bundled together to form a tuft 54 of cleaning elements/filaments 24. Such tufts 54 may have a packing factor within a range from about 45% to about 57%, or from about 45% to about 55%, or from about 48% to about 50%.

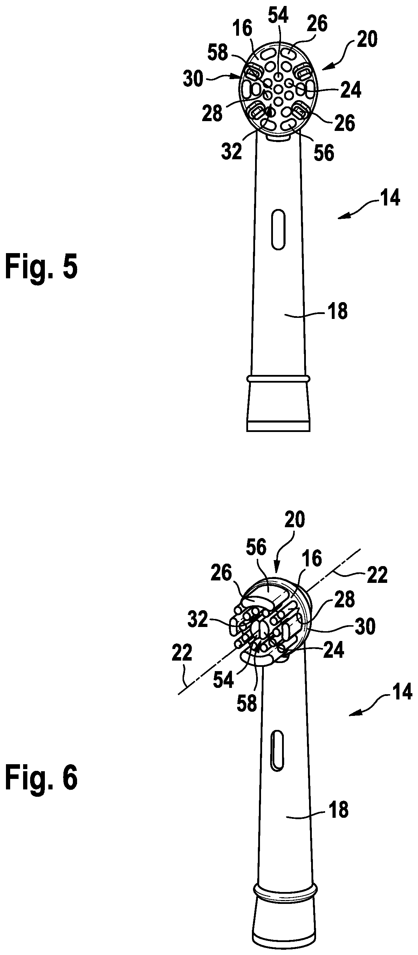

As shown in Figs. 2 to 5, at least some of the first cleaning elements 24 bundled together in tufts of a first type 54 can be at least partially arranged in a circle around the rotation axis 22. Moreover, at least some of the first cleaning elements 24 bundled together in tufts of the first type 54 can be arranged at the center 58 of the carrier 16 (see Figs. 5 and 6).

Further, as illustrated in Fig. 2, at least some of the first cleaning elements 24 bundled together in tufts of the first type 54 are circumferentially inclined in the same circumferential direction with respect to the rotation axis 22.

As illustrated in Figs. 2 to 6, at least some of the second cleaning elements 26 bundled together in tufts of a second type 56 can be at least partially arranged in a circle around the rotation axis 22 along the outer rim 30 of the carrier 16.

As shown in Fig. 2, tufts of the first type 54 and tufts of the second type 56 can also be arranged in an alternating manner in circumferential direction with respect to the rotation axis 22.

In the context of this disclosure, the term "substantially" refers to an arrangement of elements or features that, while in theory would be expected to exhibit exact correspondence or behavior, may, in practice embody something slightly less than exact. As such, the term denotes the degree by which a quantitative value, measurement or other related representation may vary from a stated reference without resulting in a change in the basic function of the subject matter at issue.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A cleaning section (14) for an electric oral hygiene device (10), the cleaning section (14) comprising:
a carrier (16) mounted for driven rotation and/or oscillating rotation around a rotation axis (22); and
at least a plurality of first cleaning elements (24) and a plurality of second cleaning elements (26), the cleaning elements (24, 26) mounted on a mounting surface (28) of the carrier (16), the carrier (16) having an outer rim (30) and an inner portion (32),
the plurality of first cleaning elements (24) being arranged at the inner portion (32) of the carrier (16), and the plurality of second cleaning elements (26) being arranged at the outer rim (30) of the carrier (16), the plurality of first cleaning elements (24) each having a longitudinal axis and a substantially cross-shaped cross-sectional area (34) extending in a plane substantially perpendicular to the longitudinal axis, the cross-shaped cross-sectional area (34) having four projections (36) and four channels (38), the projections (36) and channels (38) being arranged in an alternating manner, wherein at least some of the first cleaning elements (24) are at least partially arranged in a circle around the rotation axis (22), **characterised in that** the at least some of the first cleaning elements (24) are circumferentially inclined in the same circumferential direction with respect to the rotation axis (22).

2. A cleaning section (14) according to claim 1, wherein the second cleaning elements (26) have each a longitudinal axis and a cross-sectional area extending in a plane substantially perpendicular to the longitudinal axis, the cross-section area being different from the cross-sectional area of the first cleaning elements, preferably substantially circular, trilobal, or comprising a shape with a plurality of indentations.

3. A cleaning section (14) according to claim 1 or 2, wherein the first and/or second cleaning elements (24, 26) are filaments arranged in tufts (54, 56), or an elastomeric cleaning element.

4. A cleaning section (14) according to any of the preceding claims, wherein the first cleaning elements (24) are filaments arranged in tufts (54) having a packing factor within a range from about 45% to about 57%, preferably from about 45% to about 55%, further preferably from about 48% to about 50%.

5. A cleaning section (14) according to any of the preceding claims, wherein at least some of the second cleaning elements (26) are at least partially arranged in a circle around the rotation axis (22) along the outer rim (30) of the carrier (14).

6. A cleaning section (14) according to any of the preceding claims, wherein at least some of the first cleaning elements (24) are arranged in the center (58) of the carrier (16).

7. A cleaning section (14) according to any of the preceding claims, wherein at least some of the first cleaning elements (24) and some of the second cleaning elements (26) are arranged in an alternating manner in circumferential direction with respect to the rotation axis (22).

8. A cleaning section (14) according to any of the preceding claims, wherein the first cleaning elements (24) have each a cross-sectional area (34) with an outer diameter (40), and the outer diameter (40) of at least some of the first cleaning elements (24) is from about 0.1 mm to about 0.3 mm, preferably about 0.256 mm.

9. A cleaning section (14) according to any of the preceding claims, wherein each projection (36) of the first cleaning elements (24) have a maximum thickness (42), and the maximum thickness (42) of each projection (36) is from about 0.025 mm to about 0.045 mm, preferably from about 0.037 to about 0.041 mm.

10. A cleaning section (14) according to any of the preceding claims, wherein each channel (38) of the first cleaning element (24) has a concave curvature (44) formed by neighboring and converging projections (36), the concave curvature (44) having a radius (46), and the radius (46) of the concave curvature (44) of the channel (38) is within a range from about 0.02 mm to about 0.09 mm, preferably from about 0.03 mm to about 0.06 mm.

11. A cleaning section (14) according to any of the preceding claims, wherein each projection (36) of at least some of the first cleaning elements (24) has a distal end (48), the distal end (48) being end-rounded forming a curvature (50) with a radius (52) from about 0.01 mm to about 0.02 mm, preferably about 0.015 mm.

12. A cleaning section (14) according to any of the preceding claims, wherein at least some of the first cleaning elements (24) are made from a thermoplastic polymer, preferably from polybutylene terephthalate (PBT).

13. An electric oral hygiene device (10) comprising a handle (12) and a cleaning section (14) according to any of the preceding claims, the cleaning section (14) being repeatedly attachable to and detachable form the handle (12).

## Patentansprüche

1. Reinigungsteilstück (14) für eine elektrische Mundhygienevorrichtung (10), das Reinigungsteilstück (14) umfassend:
einen Träger (16), der für eine angetriebene Drehung und/oder eine schwingende Drehung um eine Drehachse (22) herum befestigt ist; und
wenigstens eine Vielzahl von ersten Reinigungselementen (24) und eine Vielzahl von zweiten Reinigungselementen (26), wobei die Reinigungselemente (24, 26) auf einer Befestigungsoberfläche (28) des Trägers (16) befestigt sind, wobei der Träger (16) einen äußeren Rand (30) und einen inneren Abschnitt (32) aufweist,
wobei die Vielzahl von ersten Reinigungselementen (24) an dem inneren Abschnitt (32) des Trägers (16) angeordnet ist und die Vielzahl von zweiten Reinigungselementen (26) an dem äußeren Rand (30) des Trägers (16) angeordnet ist, wobei die Vielzahl von ersten Reinigungselementen (24) jeweils eine Längsachse und einen im Wesentlichen kreuzförmigen Querschnittsbereich (34) aufweist, der sich in einer Ebene im Wesentlichen senkrecht zu der Längsachse erstreckt, wobei der kreuzförmige Querschnittsbereich (34) vier Vorsprünge (36) und vier Kanäle (38) aufweist, wobei die Vorsprünge (36) und die Kanäle (38) in einer abwechselnden Weise angeordnet sind, wobei wenigstens einige der ersten Reinigungselemente (24) wenigstens teilweise in einem Kreis um die Drehachse (22) herum angeordnet sind, **dadurch gekennzeichnet, dass** die wenigstens einigen der ersten Reinigungselemente (24) in der gleichen Umfangsrichtung in Bezug auf die Drehachse (22) umlaufend geneigt sind.

2. Reinigungsteilstück (14) nach Anspruch 1, wobei die zweiten Reinigungselemente (26) jeweils eine Längsachse und einen Querschnittsbereich aufweisen, der sich in einer Ebene im Wesentlichen senkrecht zu der Längsachse erstreckt, wobei der Querschnittsbereich sich von dem Querschnittsbereich der ersten Reinigungselemente unterscheidet, vorzugsweise im Wesentlichen kreisförmig, trilobal oder eine Form mit einer Vielzahl von Vertiefungen umfassend.

3. Reinigungsteilstück (14) nach Anspruch 1 oder 2, wobei die ersten und/oder die zweiten Reinigungselemente (24, 26) Fäden, die in Büscheln (54, 56) angeordnet sind, oder ein elastomeres Reinigungselement sind.

4. Reinigungsteilstück (14) nach einem der vorstehenden Ansprüche, wobei die ersten Reinigungselemente (24) Fäden sind, die in Büscheln (54) angeordnet sind, die einen Packungsfaktor innerhalb eines Umfangs von etwa 45 % bis etwa 57 %, vorzugsweise von etwa 45 % bis etwa 55 %, ferner vorzugsweise von etwa 48 % bis etwa 50 % aufweisen.

5. Reinigungsteilstück (14) nach einem der vorstehenden Ansprüche, wobei wenigstens einige der zweiten Reinigungselemente (26) wenigstens teilweise in einem Kreis um die Drehachse (22) herum entlang des äußeren Randes (30) des Trägers (14) angeordnet sind.

6. Reinigungsteilstück (14) nach einem der vorstehenden Ansprüche, wobei wenigstens einige der ersten Reinigungselemente (24) in dem Zentrum (58) des Trägers (16) angeordnet sind.

7. Reinigungsteilstück (14) nach einem der vorstehenden Ansprüche, wobei wenigstens einige der ersten Reinigungselemente (24) und einige der zweiten Reinigungselemente (26) in einer abwechselnden Weise in Umfangsrichtung in Bezug auf die Drehachse (22) angeordnet sind.

8. Reinigungsteilstück (14) nach einem der vorstehenden Ansprüche, wobei die ersten Reinigungselemente (24) jeweils einen Querschnittsbereich (34) mit einem Außendurchmesser (40) aufweisen und der Außendurchmesser (40) von wenigstens einigen der ersten Reinigungselemente (24) von etwa 0,1 mm bis etwa 0,3 mm, vorzugsweise etwa 0,256 mm beträgt.

9. Reinigungsteilstück (14) nach einem der vorstehenden Ansprüche, wobei jeder Vorsprung (36) der ersten Reinigungselemente (24) eine maximale Dicke (42) aufweist und die maximale Dicke (42) jedes Vorsprungs (36) von etwa 0,025 mm bis etwa 0,045 mm, vorzugsweise von etwa 0,037 bis etwa 0,041 mm beträgt.

10. Reinigungsteilstück (14) nach einem der vorstehenden Ansprüche, wobei jeder Kanal (38) des ersten Reinigungselements (24) eine konkave Krümmung (44) aufweist, die durch benachbarte und konvergierende Vorsprünge (36) ausgebildet ist, wobei die konkave Krümmung (44) einen Radius (46) aufweist und der Radius (46) der konkaven Krümmung (44) des Kanals (38) innerhalb eines Umfangs von etwa 0,02 mm bis etwa 0,09 mm, vorzugsweise von etwa 0,03 mm bis etwa 0,06 mm liegt.

11. Reinigungsteilstück (14) nach einem der vorstehenden Ansprüche, wobei jeder Vorsprung (36) von wenigstens einigen der ersten Reinigungselemente (24) ein distales Ende (48) aufweist, wobei das distale Ende (48) endgerundet ist, eine Krümmung (50) mit einem Radius (52) von etwa 0,01 mm bis etwa 0,02 mm, vorzugsweise etwa 0,015 mm ausbildet.

12. Reinigungsteilstück (14) nach einem der vorstehenden Ansprüche, wobei wenigstens einige der ersten Reinigungselemente (24) aus einem Thermoplastpolymer, vorzugsweise aus Polybutylenterephthalat (PBT) hergestellt sind.

13. Elektrische Mundhygienevorrichtung (10), umfassend einen Griff (12) und ein Reinigungsteilstück (14) nach einem der vorstehenden Ansprüche, wobei das Reinigungsteilstück (14) wiederholt an dem Griff (12) anbringbar und von diesem abnehmbar ist.

## Revendications

1. Section de nettoyage (14) pour un dispositif électrique d'hygiène bucco-dentaire (10), la section de nettoyage (14) comprenant :
un support (16) monté pour une rotation entraînée et/ou une rotation oscillante autour d'un axe de rotation (22) ; et
au moins une pluralité de premiers éléments de nettoyage (24) et une pluralité de seconds éléments de nettoyage (26), les éléments de nettoyage (24, 26) étant montés sur une surface de montage (28) du support (16), le support (16) ayant un rebord externe (30) et une partie interne (32),
la pluralité de premiers éléments de nettoyage (24) étant disposée au niveau de la partie interne (32) du support (16), et la pluralité de seconds éléments de nettoyage (26) étant disposée au niveau du rebord externe (30) du support (16), la pluralité de premiers éléments de nettoyage (24) ayant chacun un axe longitudinal et une zone de section transversale sensiblement en forme de croix (34) s'étendant dans un plan sensiblement perpendiculaire à l'axe longitudinal, la zone de section transversale en forme de croix (34) ayant quatre saillies (36) et quatre canaux (38), les saillies (36) et les canaux (38) étant disposés de manière alternée, dans laquelle au moins certains des premiers éléments de nettoyage (24) sont au moins partiellement disposés en cercle autour de l'axe de rotation (22), **caractérisée en ce que** les au moins certains des premiers éléments de nettoyage (24) sont inclinés circonférentiellement dans la même direction circonférentielle par rapport à l'axe de rotation (22).

2. Section de nettoyage (14) selon la revendication 1, dans laquelle les seconds éléments de nettoyage (26) ont chacun un axe longitudinal et une surface de section transversale s'étendant dans un plan sensiblement perpendiculaire à l'axe longitudinal, la surface de section transversale étant différente de la surface de section transversale des premiers éléments de nettoyage, de préférence sensiblement circulaire, trilobée, ou comprenant une forme avec une pluralité d'indentations.

3. Section de nettoyage (14) selon la revendication 1 ou 2, dans laquelle les premier et/ou second éléments de nettoyage (24, 26) sont des filaments agencés en touffes (54, 56), ou un élément de nettoyage en élastomère.

4. Section de nettoyage (14) selon l'une quelconque des revendications précédentes, dans laquelle les premiers éléments de nettoyage (24) sont des filaments agencés en touffes (54) ayant un facteur de tassement à l'intérieur d'une plage d'environ 45 % à environ 57 %, de préférence d'environ 45 % à environ 55 %, de préférence encore d'environ 48 % à environ 50 %.

5. Section de nettoyage (14) selon l'une quelconque des revendications précédentes, dans laquelle au moins certains des seconds éléments de nettoyage (26) sont au moins partiellement disposés en cercle autour de l'axe de rotation (22) le long du rebord externe (30) du support (14).

6. Section de nettoyage (14) selon l'une quelconque des revendications précédentes, dans laquelle au moins certains des premiers éléments de nettoyage (24) sont disposés au centre (58) du support (16).

7. Section de nettoyage (14) selon l'une quelconque des revendications précédentes, dans laquelle au moins certains des premiers éléments de nettoyage (24) et certains des seconds éléments de nettoyage (26) sont agencés d'une manière alternée dans la direction circonférentielle par rapport à l'axe de rotation (22).

8. Section de nettoyage (14) selon l'une quelconque des revendications précédentes, dans laquelle les premiers éléments de nettoyage (24) ont chacun une zone de section transversale (34) avec un diamètre externe (40), et le diamètre externe (40) d'au moins certains des premiers éléments de nettoyage (24) est d'environ 0,1 mm à environ 0,3 mm, de préférence d'environ 0,256 mm.

9. Section de nettoyage (14) selon l'une quelconque des revendications précédentes, dans laquelle chaque saillie (36) des premiers éléments de nettoyage (24) a une épaisseur maximale (42), et l'épaisseur maximale (42) de chaque saillie (36) est d'environ 0,025 mm à environ 0,045 mm, de préférence d'environ 0,037 à environ 0,041 mm.

10. Section de nettoyage (14) selon l'une quelconque des revendications précédentes, dans laquelle chaque canal (38) du premier élément de nettoyage (24) a une courbure concave (44) formée par des parties saillantes voisines et convergentes (36), la courbure concave (44) ayant un rayon (46), et le rayon (46) de la courbure concave (44) du canal (38) est dans une plage d'environ 0,02 mm à environ 0.09 mm, de préférence d'environ 0,03 mm à environ 0,06 mm.

11. Section de nettoyage (14) selon l'une quelconque des revendications précédentes, dans laquelle chaque saillie (36) d'au moins certains des premiers éléments de nettoyage (24) a une extrémité distale (48), l'extrémité distale (48) étant arrondie d'extrémité formant une courbure (50) avec un rayon (52) d'environ 0,01 mm à environ 0,02 mm, de préférence d'environ 0,015 mm.

12. Section de nettoyage (14) selon l'une quelconque des revendications précédentes, dans laquelle au moins certains des premiers éléments de nettoyage (24) sont fabriqués à partir d'un polymère thermoplastique, de préférence à partir de téréphtalate de polybutylène (PBT).

13. Dispositif électrique d'hygiène bucco-dentaire (10) comprenant un manche (12) et une section de nettoyage (14) selon l'une quelconque des revendications précédentes, la section de nettoyage (14) pouvant être attachée à plusieurs reprises au manche et détachée du manche (12).
